# EUROPEAN PATENT APPLICATION

(11) **EP 4 764 185 A1**
(43) Date of publication of application: **24.06.2026**
(21) Application number: 24885455.6
(22) Date of filing: 17.10.2024
(51) Int. Cl.: F02C 7/224, F01D 25/00, F02C 3/22, F02C 7/00, F02C 7/22, F02C 7/232

(54) **FUEL GAS HEATING DEVICE AND COMBINED CYCLE PLANT**

(30) Priority: 30.10.2023 JP 2023185162
(71) Applicant: Mitsubishi Heavy Industries, Ltd., Chiyoda-ku Tokyo 100-8332 (JP)
(72) Inventor: KONAKA, Yuji, Tokyo 100-8332 (JP)
(74) Representative: Hoffmann Eitle
(86) International application number: PCT/JP2024/036948
(87) International publication number: WO 2025/094681

(57) **Abstract**

The present application relates to a fuel gas heating device for heating a fuel gas supplied to a gas turbine. This device is provided with a hydrocarbon gas heater and a hydrogen-containing gas heater for heating, respectively, a hydrocarbon gas supplied as a fuel gas and a hydrogen-containing gas. The hydrocarbon gas heater heats a hydrocarbon gas by heat exchange with a first heat medium supplied from a first heat medium supply line. The hydrogen-containing gas heater heats a hydrogen-containing gas by heat exchange with a second heat medium supplied from a second heat medium supply line that branches from the first heat medium supply line.

## Description

### Technical Field

The present disclosure relates to a fuel gas heating device and a combined cycle plant.

The present application claims priority based on JP2023-185162 filed in Japan on October 30, 2023, the contents of which are incorporated herein by reference.

### Background Art

A gas turbine that can drive a turbine using combustion gas generated by burning fuel is known. In the related art, examples of the fuel gas used in the gas turbine include hydrocarbon gas such as natural gas.

Here, the fuel gas supplied to the gas turbine may be heated in advance to optimize the plant performance. For example, PTL 1 discloses a configuration in which a fuel gas heating unit is provided in a fuel gas supply line to heat fuel supplied to a gas turbine. In PTL 1, in the fuel gas heating unit, the fuel gas flowing through the fuel gas supply line is heated by heat exchange with a high-temperature heat medium.

### Citation List

### Patent Literature

[PTL 1] Japanese Unexamined Patent Application Publication No. 2018-178821

### Summary of Invention

### Technical Problem

In recent years, in a gas turbine, the use of hydrogen-containing gas having a larger combustion rate, in addition to hydrocarbon gas such as natural gas in the related art, is being studied as fuel gas. Therefore, when the configuration in which the fuel gas is heated by heat exchange with the heat medium is adopted as in PTL 1, it is necessary to perform design considering hydrogen embrittlement or corrosion. For example, when the hydrocarbon gas such as the natural gas is used as the fuel gas as in the related art, the cost reduction is achieved by forming a tube through which the heat medium flows from stainless steel and forming a shell on the outside of the tube from carbon steel. However, a joint portion between different materials such as the stainless steel and the carbon steel is a weak portion from the viewpoint of hydrogen embrittlement or corrosion. Therefore, in order to handle the hydrogen-containing gas as the fuel gas, the entire configuration needs to be redesigned with the stainless steel, which significantly increases the cost.

At least one embodiment of the present disclosure has been made in view of the above circumstances, and an object of the present disclosure is to provide a fuel gas heating device and a combined cycle plant that can suitably heat both fuels while suppressing the cost when handling hydrocarbon gas and hydrogen-containing gas as fuel gas supplied to a gas turbine.

### Solution to Problem

**In** order to achieve the above object, at least one embodiment of the present disclosure provides a fuel gas heating device for heating fuel gas supplied to a gas turbine, the fuel gas heating device including: a first fuel supply line that supplies hydrocarbon gas as the fuel gas to the gas turbine; a second fuel supply line that merges with the first fuel supply line and supplies hydrogen-containing gas as the fuel to the gas turbine; a hydrocarbon gas heater provided upstream of a merging point with the second fuel supply line in the first fuel supply line for heating the hydrocarbon gas; a hydrogen-containing gas heater provided upstream of the merging point in the second fuel supply line for heating the hydrogen-containing gas; a first heat medium supply line that supplies a first heat medium for heat exchange with the hydrocarbon gas to the hydrocarbon gas heater; and a second heat medium supply line that branches from the first heat medium supply line and supplies at least a portion of the first heat medium as a second heat medium for heat exchange with the hydrogen-containing gas to the hydrogen-containing gas heater.

**In** order to achieve the above object, at least one embodiment of the present disclosure provides a combined cycle plant including: the gas turbine to which the fuel gas heated by the fuel heating device according to the at least one embodiment of the present disclosure is supplied.

### Advantageous Effects of Invention

According to at least one embodiment of the present disclosure, it is possible to provide the fuel gas heating device and the combined cycle plant that can suitably heat both fuels while suppressing the cost when handling the hydrocarbon gas and the hydrogen-containing gas as the fuel gas supplied to the gas turbine.

### Brief Description of Drawings

FIG. 1 is a schematic configuration diagram of a combined cycle plant according to one embodiment.
FIG. 2 is a schematic diagram showing an internal configuration of a fuel gas heating device shown in FIG. 1.
FIG. 3A is a perspective view schematically showing a hydrocarbon gas heater shown in FIG. 2.
FIG. 3B is a perspective view schematically showing a hydrogen-containing gas heater shown in FIG. 2.

### Description of Embodiments

Hereinafter, some embodiments of the present invention will be described with reference to the accompanying drawings. However, the configurations described as the embodiments or shown in the drawings are merely examples for purposes of description, and are not intended to limit the scope of the present invention.

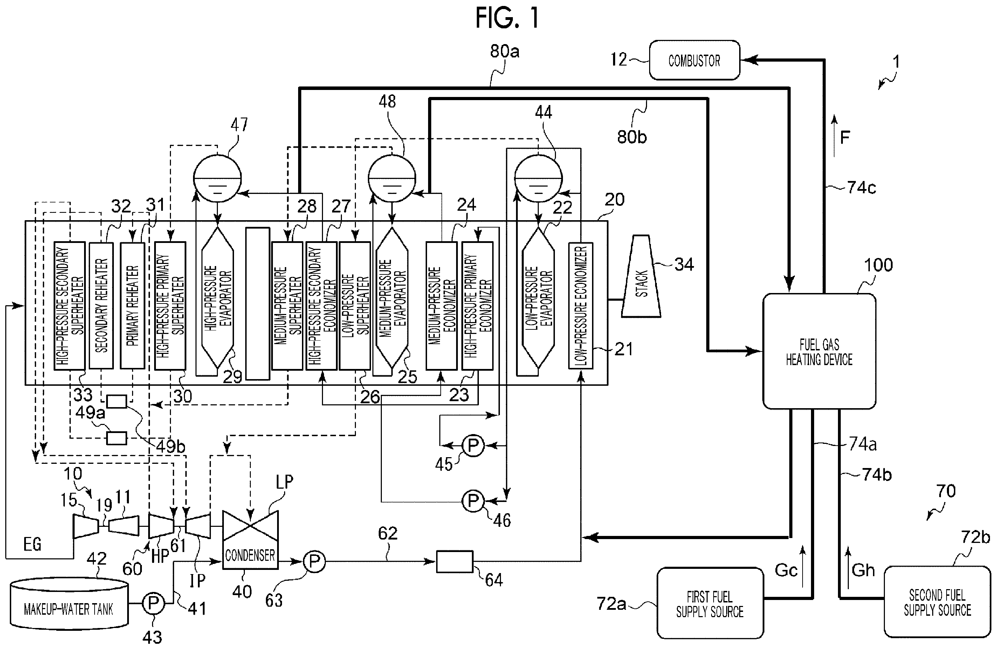

First, a configuration of a combined cycle plant 1 including a fuel gas heating device 100 according to at least one embodiment of the present disclosure will be described with reference to FIG. 1. FIG. 1 is a schematic configuration diagram of the combined cycle plant 1 according to the embodiment.

The combined cycle plant 1 includes a gas turbine 10, a heat recovery steam generator 20 for generating steam using exhaust gas EG from the gas turbine 10, a steam turbine 60 that can be driven by the steam from the heat recovery steam generator 20, and a condenser 40 for converting the steam from the steam turbine 60 into water.

The gas turbine 10 includes a compressor 11 for compressing combustion air and a turbine 15 that is driven by combustion gas generated by mixing the combustion air compressed by the compressor 11 and fuel gas supplied from a fuel supply system 70 and burning the mixture. A rotor of the compressor 11 and a rotor of the turbine 15 are connected to each other to form a gas turbine rotor 19.

The steam turbine 60 includes a high-pressure steam turbine HP, a medium-pressure steam turbine IP, and a low-pressure steam turbine LP. The high-pressure steam turbine HP, the medium-pressure steam turbine IP, and the low-pressure steam turbine LP have their respective rotary shafts connected to one another to form a steam turbine rotor 61. The steam turbine rotor 61 is integrally connected to the gas turbine rotor 19. The steam that has performed work in the steam turbine 60 is returned to condensate in the condenser 40.

The condensate of the condenser 40 can be supplied to the heat recovery steam generator 20 through a condensate supply line 62. A low-pressure water supply pump 63 is provided in the condensate supply line 62, and an amount of condensate supplied to the heat recovery steam generator 20 can be adjusted. In addition, a temperature reducer 64 is provided downstream of the low-pressure water supply pump 63 in the condensate supply line 62, and a temperature of water supplied to the heat recovery steam generator 20 can be adjusted.

A makeup-water tank 42 is connected to the condenser 40 through a makeup-water supply line 41. A makeup-water supply pump 43 is installed in the makeup-water supply line 41, and, when the condensate is insufficient in the condenser 40, the make-up water can be supplied from the makeup-water tank 42.

The heat recovery steam generator 20 has a configuration for recovering heat (exhaust heat) contained in the exhaust gas EG from the gas turbine 10 and effectively using the heat. The heat recovery steam generator 20 includes, as a configuration for using the heat recovered from the exhaust gas EG, a low-pressure economizer 21, a low-pressure evaporator 22, a high-pressure primary economizer 23, a medium-pressure economizer 24, a medium-pressure evaporator 25, a low-pressure superheater 26, a high-pressure secondary economizer 27, a medium-pressure superheater 28, a high-pressure evaporator 29, a high-pressure primary superheater 30, a primary reheater 31, a secondary reheater 32, and a high-pressure secondary superheater 33.

The exhaust gas after the heat is recovered in the heat recovery steam generator 20 is discharged to the outside from a stack 34.

In the heat recovery steam generator 20, the supply water (condensate) from the condenser 40 is first heated by the low-pressure economizer 21. At least a portion of the supply water heated by the low-pressure economizer 21 is stored in a low-pressure drum 44. The low-pressure evaporator 22 is connected to the low-pressure drum 44, and the steam can be generated from at least a portion of the water stored in the low-pressure drum 44. The steam generated by the low-pressure evaporator 22 is returned to the low-pressure drum 44.

In addition, the supply water heated by the low-pressure economizer 21 is supplied to a high-pressure water supply pump 45 and a medium-pressure water supply pump 46. The medium-pressure water supply pump 46 pressurizes the supply water to a first pressure P1, and the high-pressure water supply pump 45 pressurizes the supply water to a second pressure P2 (> the first pressure P1). The supply water pressurized to the second pressure P2 by the high-pressure water supply pump 45 is heated by the high-pressure primary economizer 23 and the high-pressure secondary economizer 27, and then supplied to a high-pressure drum 47. The supply water pressurized to the first pressure P1 by the medium-pressure water supply pump 46 is heated by the medium-pressure economizer 24, and then supplied to a medium-pressure drum 48.

The high-pressure water supply pump 45 and the medium-pressure water supply pump 46 may be integrally configured.

The high-pressure evaporator 29 is connected to the high-pressure drum 47, and the steam can be generated from at least a portion of the water stored in the high-pressure drum 47. The steam generated by the high-pressure evaporator 29 is returned to the high-pressure drum 47. The steam extracted from the high-pressure drum 47 is superheated by the high-pressure primary superheater 30 and the high-pressure secondary superheater 33, and then supplied to the high-pressure steam turbine HP. A temperature reducer 49a is provided between the high-pressure primary superheater 30 and the high-pressure secondary superheater 33, and the temperature of the steam supplied to the high-pressure steam turbine HP can be appropriately controlled by controlling a temperature reduction amount of the temperature reducer 49a.

The steam that has performed work in the high-pressure steam turbine HP is heated by the primary reheater 31 and the secondary reheater 32, and then supplied to the medium-pressure steam turbine IP. A temperature reducer 49b is provided between the primary reheater 31 and the secondary reheater 32, and the temperature of the steam supplied to the medium-pressure steam turbine IP can be appropriately controlled by controlling a temperature reduction amount of the temperature reducer 49b.

The medium-pressure evaporator 25 is connected to the medium-pressure drum 48, and the steam can be generated from at least a portion of the water stored in the medium-pressure drum 48. The steam generated by the medium-pressure evaporator 25 is returned to the medium-pressure drum 48. A portion of the steam extracted from the medium-pressure drum 48 is heated by the medium-pressure superheater 28, supplied to an outlet flow path of the high-pressure steam turbine HP, and supplied to the medium-pressure steam turbine IP through the primary reheater 31 and the secondary reheater 32.

The low-pressure evaporator 22 is connected to the low-pressure drum 44, and the steam can be generated from at least a portion of the water stored in the low-pressure drum 44. The steam generated by the low-pressure evaporator 22 is returned to the low-pressure drum 44. A portion of the steam extracted from the low-pressure drum 44 is heated by the low-pressure superheater 26, supplied to an outlet flow path of the medium-pressure steam turbine IP, and supplied to the low-pressure steam turbine LP. The steam that has finished work in the low-pressure steam turbine LP is returned to the condenser 40.

The combined cycle plant 1 having the above configuration includes a fuel supply system 70 that supplies hydrocarbon gas Gc and hydrogen-containing gas Gh as fuel gas F to a combustor 12 of the gas turbine 10. The fuel supply system 70 supplies the fuel gas F to the combustor 12, and in the combustor 12, the combustion gas for driving the gas turbine 10 is generated by mixing the combustion air compressed by the compressor 11 with the fuel gas F and burning the mixture (in FIG. 1, the combustor 12 is shown at a position away from the gas turbine 10 for ease of understanding).

The fuel supply system 70 includes a first fuel supply source 72a that supplies the hydrocarbon gas Gc and a second fuel supply source 72b that supplies the hydrogen-containing gas Gh. The hydrocarbon gas Gc is natural gas, and the hydrogen-containing gas Gh has a hydrogen content of 50 mol% or more. Here, the hydrocarbon gas Gc is fuel gas having a lower hydrogen content than the hydrogen-containing gas Gh, and the hydrogen content may be 0%. In addition, the hydrogen-containing gas Gh is fuel gas having a hydrogen content at least higher than the hydrocarbon gas Gc, and the hydrogen content is preferably 50 mol% or more.

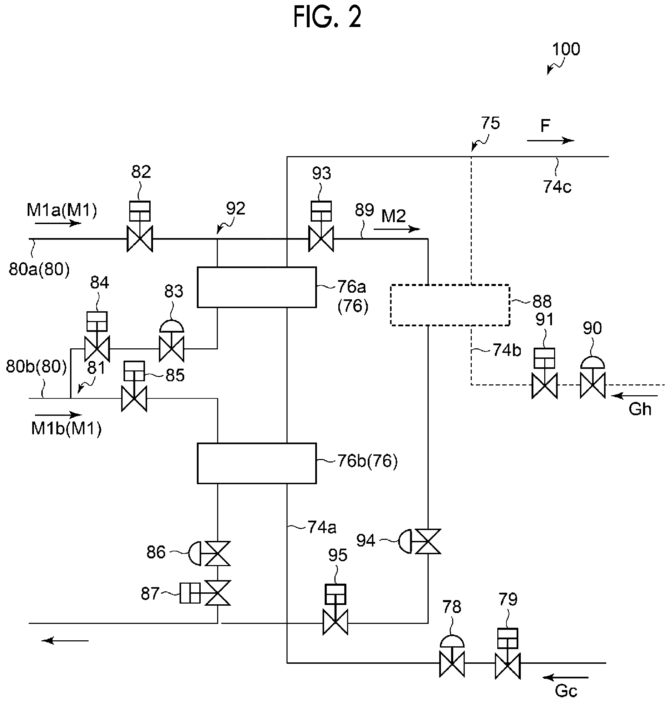

The hydrocarbon gas Gc is supplied from the first fuel supply source 72a to the combustor 12 of the gas turbine through a first fuel gas supply line 74a. The hydrogen-containing gas Gh is supplied from the second fuel supply source 72b to the combustor 12 of the gas turbine through a second fuel gas supply line 74b. As shown in FIG. 2, the first fuel gas supply line 74a and the second fuel gas supply line 74b merge with each other in the fuel gas heating device 100, and are connected to the combustor 12 of the gas turbine 10 through a fuel gas supply line 74c. The hydrocarbon gas Gc flowing in the first fuel gas supply line 74a and the hydrogen-containing gas Gh flowing through the second fuel gas supply line 74b are each heated by the fuel gas heating device 100.

Here, an internal configuration of the fuel gas heating device 100 will be described with reference to FIG. 2. FIG. 2 is a schematic diagram showing the internal configuration of the fuel gas heating device 100 shown in FIG. 1.

A hydrocarbon gas heater 76 that heats the hydrocarbon gas Gc is provided in the first fuel gas supply line 74a. A shutoff valve 78 for shutting off the hydrocarbon gas Gc in the first fuel gas supply line 74a and a flow regulation valve 79 for regulating a flow rate of the hydrocarbon gas Gc in the first fuel gas supply line 74a are provided between the hydrocarbon gas heater 76 and a merging point 75 with the second fuel gas supply line 74b in the first fuel gas supply line 74a.

The hydrocarbon gas heater 76 is configured to heat the hydrocarbon gas Gc flowing through the first fuel gas supply line 74a by heat exchange with a first heat medium M1. The first heat medium M1 is supplied through a first heat medium supply line 80. In the present embodiment, the first heat medium supply line 80 includes a high-pressure water supply line 80a that branches from a steam line connecting the medium-pressure economizer 24 and the medium-pressure drum 48 in the heat recovery steam generator 20, and a medium-pressure water supply line 80b that branches from a steam line connecting the high-pressure secondary economizer 27 and the high-pressure drum 47 in the heat recovery steam generator 20.

From the high-pressure water supply line 80a, high-temperature heated water M1a (supply water from the high-pressure water supply pump 45) having the first pressure P1 is supplied as the first heat medium M1. From the medium-pressure water supply line 80b, high-temperature heated water M1b (supply water from the medium-pressure water supply pump 46) having the second pressure P2 lower than the first pressure P1 is supplied as the first heat medium M1. The high-pressure water supply line 80a merges with the medium-pressure water supply line 80b at a merging portion 81 located on a downstream side.

The hydrocarbon gas heater 76 includes a first heater 76a that heats the hydrocarbon gas Gc by heat exchange with the first heat medium M1a flowing through the high-pressure water supply line 80a, and a second heater 76b that heats the hydrocarbon gas Gc by heat exchange with the first heat medium M1b flowing through the medium-pressure water supply line 80b. As a result, the temperature of the hydrocarbon gas Gc flowing through the first fuel gas supply line 74a is effectively raised by being heated by heat exchange with the first heat medium M flowing through the high-pressure water supply line 80a in the first heater 76a, and further heated by heat exchange with the first heat medium M1b flowing through the medium-pressure water supply line 80b in the second heater 76b.

A flow regulation valve 82 for regulating the flow rate of the first heat medium M1a is provided upstream of the first heater 76a in the high-pressure water supply line 80a. In addition, in a section between the first heater 76a and the merging portion 81 in the high-pressure water supply line 80a, a shutoff valve 83 for shutting off the first heat medium M1a flowing through the section, and a flow regulation valve 84 for regulating the flow rate of the first heat medium M1a flowing through the section are provided. In addition, in a section between the merging portion 81 and the second heater 76b in the medium-pressure water supply line 80b, a flow regulation valve 85 for regulating the flow rate of the first heat medium M1b flowing through the section is provided. In addition, in a section upstream or downstream of the first heater 76b in the medium-pressure water supply line 80b, a shutoff valve 86 for shutting off the first heat medium M1b flowing through the section and a flow regulation valve 87 for regulating the flow rate of the first heat medium M1b flowing through the section are provided.

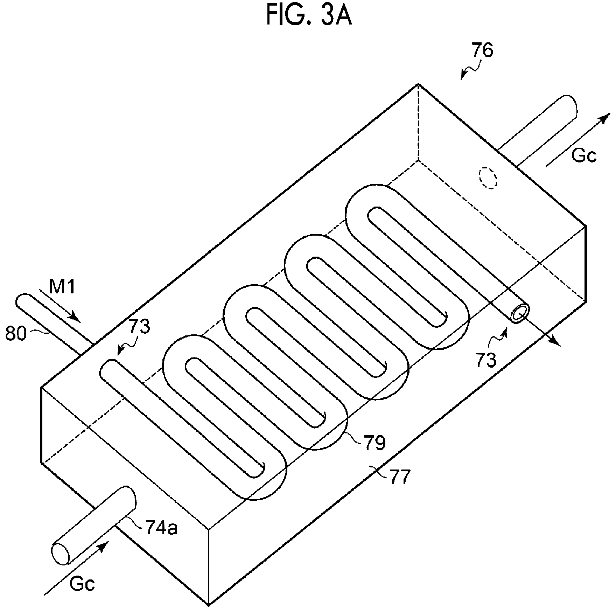

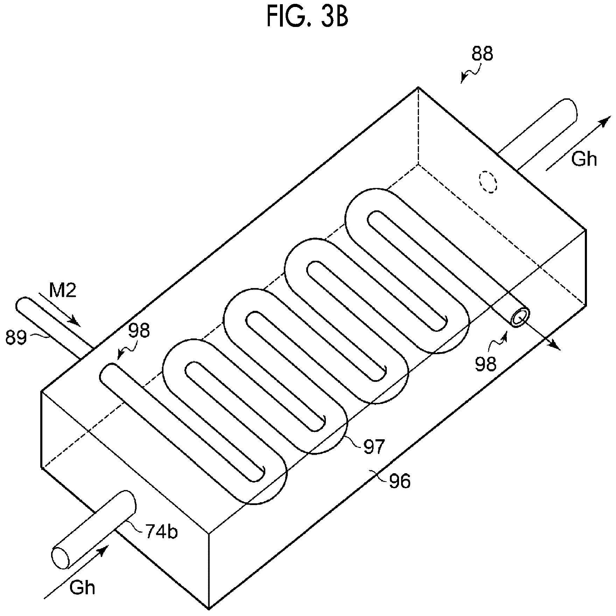

Here, FIG. 3Ais a perspective view schematically showing the hydrocarbon gas heater 76 shown in FIG. 2. The hydrocarbon gas heater 76 is a heat exchanger having a shell-and-tube structure including a shell 77 and a heat transfer tube 79.

The shell 77 has a hollow structure, and the hydrocarbon gas Gc that is a heating target is introduced into the shell 77 from the first fuel gas supply line 74a. The heat transfer tube 79 is housed inside the shell 77 by penetrating the shell 77, and the first heat medium M1 is introduced from the first heat medium supply line 80 to heat the hydrocarbon gas Gc by heat exchange inside the shell 77. The hydrocarbon gas heater 76 having such a configuration can reduce the cost by forming the heat transfer tube 79 through which the first heat medium M1 flows from the stainless steel and forming the shell 77 on the outside of the heat transfer tube 79 from relatively inexpensive carbon steel (that is, the hydrocarbon gas heater 76 includes the shell 77 including the stainless steel and the heat transfer tube 79 including the carbon steel, and thus has a joint portion 73 in which different materials are joined to each other).

The hydrogen-containing gas heater 88 is configured to heat the hydrogen-containing gas Gh flowing through the second fuel gas supply line 74b by heat exchange with a second heat medium M2. The second heat medium M2 is supplied through a second heat medium supply line 89 that branches from the first heat medium supply line 80. In the present embodiment, the second heat medium supply line 89 branches from the high-pressure water supply line 80a (in particular, a branch point 92 provided between the flow regulation valve 82 and the first heater 76a) of the first heat medium supply line 80, so that a portion of the high-pressure first heat medium M1a (supply water from the high-pressure water supply pump 45) is used as the second heat medium M2.

A shutoff valve 90 for shutting off the hydrogen-containing gas Gh and a flow regulation valve 91 for regulating the flow rate of the hydrogen-containing gas Gh are provided in the second fuel gas supply line 74b. In addition, a flow regulation valve 93 for regulating the flow rate of the second heat medium M2 in a section is provided between the branch point 92 and the hydrogen-containing gas heater 88 in the second heat medium supply line 89. In addition, in a section upstream or downstream of the hydrogen-containing gas heater 88 in the second heat medium supply line 89, a shutoff valve 94 for shutting off the second heat medium M2 in the section and a flow regulation valve 95 for regulating the flow rate of the second heat medium M2 in the section are provided.

The second heat medium supply line 89 merges with the first heat medium supply line 80 (medium-pressure water supply line 90b) located on the downstream side, and the first heat medium M1 and the second heat medium M2 after heat exchange are returned to the condensate supply line 62 (see FIG. 1).

Here, FIG. 3B is a perspective view schematically showing the hydrogen-containing gas heater 88 shown in FIG. 2. The hydrogen-containing gas heater 88 is a heat exchanger having a shell-and-tube structure as in the hydrocarbon gas heater 76, and includes a shell 96 and a heat transfer tube 97.

The shell 96 has a hollow structure, and the hydrogen-containing gas Gh that is a heating target is introduced into the shell 96 from the second fuel gas supply line 74b. The heat transfer tube 97 is housed inside the shell 96 by penetrating the shell 96, and the second heat medium M2 is introduced from the second heat medium supply line 89 to heat the hydrogen-containing gas Gh by heat exchange inside the shell 96. **In** the hydrogen-containing gas heater 88 having such a configuration, the heat transfer tube 97 through which the second heat medium M2 flows and the shell 96 on the outside of the heat transfer tube 97 are both made of stainless steel. As a result, the joint portion 98 between the shell 96 and the heat transfer tube 97 is made of the same material, so that the joint portion 98 has excellent resistance from the viewpoint of the hydrogen embrittlement or corrosion.

As described above, in the above embodiment, the hydrocarbon gas Gc and the hydrogen-containing gas Ch are supplied to the combustor 12 of the gas turbine 10 as the fuel gas F through the first fuel supply line 74a and the second fuel supply line 74b. Since the hydrocarbon gas heater 76 and the hydrogen-containing gas heater 88 for heating the hydrocarbon gas Gc and the hydrogen-containing gas Gh are provided in the first fuel supply line 74a and the second fuel supply line 74b, respectively, the hydrocarbon gas Gc and the hydrogen-containing gas Gh can be heated by heat exchange with the heat medium.

By separating the configuration for heating the hydrogen-containing gas Gh and the configuration for heating the hydrocarbon gas Gc, the entire device can be downsized in cost as compared to when the entire device is designed considering the hydrogen embrittlement or corrosion. **In** particular, as shown in FIGS. 3A and 3B, the hydrocarbon gas heater 76 that does not require resistance to the hydrogen embrittlement or corrosion includes at least a portion of relatively inexpensive carbon steel to reduce the cost, and the hydrogen-containing gas heater 88 that handles the hydrogen-containing gas is made of the stainless steel as a whole, so that it is possible to obtain good resistance to the hydrogen embrittlement or corrosion.

**In** addition, the components in the above embodiments may be replaced as appropriate with well-known components without departing from the gist of the present disclosure, and the above embodiments may also be combined as appropriate.

The contents described in each of the above embodiments can be understood as follows.

(1) One aspect relates to a fuel gas heating device for heating fuel gas supplied to a gas turbine, the fuel gas heating device including: a first fuel supply line that supplies hydrocarbon gas as the fuel gas to the gas turbine; a second fuel supply line that merges with the first fuel supply line and supplies hydrogen-containing gas as the fuel to the gas turbine; a hydrocarbon gas heater provided upstream of a merging point with the second fuel supply line in the first fuel supply line for heating the hydrocarbon gas; a hydrogen-containing gas heater provided upstream of the merging point in the second fuel supply line for heating the hydrogen-containing gas; a first heat medium supply line that supplies a first heat medium for heat exchange with the hydrocarbon gas to the hydrocarbon gas heater; and a second heat medium supply line that branches from the first heat medium supply line and supplies at least a portion of the first heat medium as a second heat medium for heat exchange with the hydrogen-containing gas to the hydrogen-containing gas heater.

According to the aspect (1), the hydrocarbon gas and the hydrogen-containing gas are supplied as the fuel gas to the gas turbine through the first fuel supply line and the second fuel supply line. The heater for heating the hydrocarbon gas and the hydrogen-containing gas is provided in each of the first fuel supply line and the second fuel supply line, so that the hydrocarbon gas and the hydrogen-containing gas can be heated by heat exchange with the heat medium. By separately providing the configuration for heating the hydrogen-containing gas and the configuration for heating the hydrocarbon gas, it is not necessary to redesign the entire device considering the hydrogen embrittlement or corrosion. As a result, it is possible to provide the fuel gas heating device that can heat the hydrocarbon gas and the hydrogen-containing gas through separate lines while suppressing the cost.

(2) **In** another aspect, in the aspect (1), the hydrogen-containing gas heater and the second fuel supply line are each made of stainless steel.

According to the aspect (2), the hydrogen-containing gas heater for heating the hydrogen-containing gas and the second fuel supply line are each made of the stainless steel. As a result, the joint portion between different materials that is weak from the viewpoint of the hydrogen embrittlement or corrosion is not exposed to the hydrogen-containing gas.

(3) **In** another aspect, in the aspect (1) or (2), the first heat medium supply line includes a high-pressure line that supplies the first heat medium having a first pressure, and a medium-pressure line that supplies the first heat medium having a second pressure lower than the first pressure, and the second heat medium supply line branches from the high-pressure line in the first heat medium supply line.

According to the aspect (3), the hydrogen-containing gas is heated by the first heat medium supplied from the high-pressure line having a relatively high pressure. Since the hydrogen-containing gas has a larger specific heat than the hydrocarbon gas, the hydrogen-containing gas can be efficiently heated by performing heat exchange with the first heat medium from the high-pressure line having a higher temperature and a higher pressure.

(4) **In** another aspect, in the aspect (3), in the fuel gas heating device, the hydrocarbon gas heater includes a first heater that heats the hydrocarbon gas by heat exchange with the first heat medium flowing through the high-pressure line, and a second heater that heats the hydrocarbon gas by heat exchange with the first heat medium flowing through the medium-pressure line.

According to the aspect (4), the temperature of the hydrocarbon gas in the fuel gas can be effectively raised by being heated in multiple stages by the first heater that can perform heat exchange with the first heat medium flowing through the high-pressure line and the second heater that can perform heat exchange with the first heat medium flowing through the medium-pressure line.

(5) **In** another aspect, in any one of the aspects (1) to (4), the first fuel supply line and the second fuel supply line branch off from a fuel supply line located on an upstream side, and a switching valve that switches between the hydrocarbon gas and the hydrogen-containing gas as the fuel gas is provided in the fuel supply line.

According to the aspect (5), in the gas turbine, any one of the hydrocarbon gas or the hydrogen-containing gas is supplied as the fuel gas in accordance with a switching state of the switching valve (for example, the shutoff valve 78 or the shutoff valve 90 in the above embodiment). **In** the present configuration, the hydrocarbon gas or the hydrogen-containing gas supplied to the gas turbine can be effectively heated with the configuration that suppresses the cost.

(6) **In** another aspect, in any one of the aspects (1) to (5), the first heat medium and the second heat medium are heated water heated by exhaust heat recovered from the gas turbine.

According to the aspect (6), the heated water generated by the exhaust heat (for example, the amount of heat recovered from the exhaust gas of the gas turbine by the heat recovery steam generator) recovered from the gas turbine is used as the heat medium for heating each fuel gas. By effectively using the thermal energy recovered in the system in this way, good energy efficiency is obtained.

(7) **In** another aspect, in any one of the aspects (1) to (6), the hydrocarbon gas is natural gas, and the hydrogen-containing gas has a hydrogen content of 50 mol% or more.

According to the aspect (7), in the gas turbine in which the natural gas is used as the hydrocarbon gas and the hydrogen-containing gas having the hydrogen content of 50 mol% or more is used as the hydrogen-containing gas, the fuel supplied to the gas turbine can be suitably heated.

The natural gas is fuel gas having a lower hydrogen content than the hydrogen-containing gas, and the hydrogen content may be 0%. **In** addition, the hydrogen-containing gas is fuel gas having a hydrogen content at least higher than the natural gas, and the hydrogen content is preferably 50 mol% or more.

(8) One aspect relates to a combined cycle plant including: the gas turbine to which the fuel gas heated by the fuel gas heating device according to any one of the aspects (1) to (7) is supplied.

According to the aspect (8), when the hydrocarbon gas and the hydrogen-containing gas are used as the fuel gas supplied to the gas turbine provided in the combined cycle plant, the fuel gas can be suitably heated by the fuel gas heating device according to each of the above aspects.

### Reference Signs List

1: combined cycle plant
10: gas turbine
11: compressor
12: combustor
15: turbine
19: gas turbine rotor
20: heat recovery steam generator
21: low-pressure economizer
22: low-pressure evaporator
23: high-pressure primary economizer
24: medium-pressure economizer
25: medium-pressure evaporator
26: low-pressure superheater
27: high-pressure secondary economizer
28: medium-pressure superheater
29: high-pressure evaporator
30: high-pressure primary superheater
31: primary reheater
32: secondary reheater
33: high-pressure secondary superheater
34: stack
40: condenser
41: makeup-water supply line
42: makeup-water tank
43: makeup-water supply pump
44: low-pressure drum
47: high-pressure drum
48: medium-pressure drum
49a, 49b: temperature reducer
60: steam turbine
61: steam turbine rotor
62: condensate supply line
63: low-pressure water supply pump
64: temperature reducer
70: fuel supply system
72a: first fuel supply source
72b: second fuel supply source
74a: first fuel gas supply line
74b: second fuel gas supply line
74c: fuel gas supply line
75: merging point
80: first heat medium supply line
80a: high-pressure water supply line
80b: medium-pressure water supply line
76: hydrocarbon gas heater
76a: first heater
76b: second heater
88: hydrogen-containing gas heater
89: second heat medium supply line
92: branch point
100: fuel gas heating device
Gc: hydrocarbon gas
Gh: hydrogen-containing gas
F: fuel gas

## Claims

1. A fuel gas heating device for heating fuel gas supplied to a gas turbine, the fuel gas heating device comprising:
a first fuel supply line that supplies hydrocarbon gas as the fuel gas to the gas turbine;
a second fuel supply line that merges with the first fuel supply line and supplies hydrogen-containing gas as the fuel to the gas turbine;
a hydrocarbon gas heater provided upstream of a merging point with the second fuel supply line in the first fuel supply line for heating the hydrocarbon gas;
a hydrogen-containing gas heater provided upstream of the merging point in the second fuel supply line for heating the hydrogen-containing gas;
a first heat medium supply line that supplies a first heat medium for heat exchange with the hydrocarbon gas to the hydrocarbon gas heater; and
a second heat medium supply line that branches from the first heat medium supply line and supplies at least a portion of the first heat medium as a second heat medium for heat exchange with the hydrogen-containing gas to the hydrogen-containing gas heater.

2. The fuel gas heating device according to Claim 1,
wherein the hydrogen-containing gas heater and the second fuel supply line are each made of stainless steel.

3. The fuel gas heating device according to Claim 1 or 2,
wherein the first heat medium supply line includes
a high-pressure line that supplies the first heat medium having a first pressure, and
a medium-pressure line that supplies the first heat medium having a second pressure lower than the first pressure, and
the second heat medium supply line branches from the high-pressure line in the first heat medium supply line.

4. The fuel gas heating device according to Claim 3,
wherein the hydrocarbon gas heater includes
a first heater that heats the hydrocarbon gas by heat exchange with the first heat medium flowing through the high-pressure line, and
a second heater that heats the hydrocarbon gas by heat exchange with the first heat medium flowing through the medium-pressure line.

5. The fuel gas heating device according to Claim 1 or 2,
wherein the first fuel supply line and the second fuel supply line branch off from a fuel supply line located on an upstream side, and
a switching valve that switches between the hydrocarbon gas and the hydrogen-containing gas as the fuel gas is provided in the fuel supply line.

6. The fuel gas heating device according to Claim 1 or 2,
wherein the first heat medium and the second heat medium are heated water heated by exhaust heat recovered from the gas turbine.

7. The fuel gas heating device according to Claim 1 or 2,
wherein the hydrocarbon gas is natural gas, and
the hydrogen-containing gas has a hydrogen content of 50 mol% or more.

8. A combined cycle plant comprising:
the gas turbine to which the fuel gas heated by the fuel gas heating device according to Claim 1 or 2 is supplied.
